# EUROPEAN PATENT APPLICATION

(11) **EP 4 757 029 A1**
(43) Date of publication of application: **10.06.2026**
(21) Application number: 25857973.9
(22) Date of filing: 12.08.2025
(51) Int. Cl.: H01M 50/24, H01M 50/204

(54) **BATTERY PACK INCLUDING FOAM PAD GASKET**

(30) Priority: 26.08.2024 KR 20240114197; 07.08.2025 KR 20250109336
(71) Applicant: LG Energy Solution, Ltd., Seoul 07335 (KR)
(72) Inventor: SON, Hong Se, Daejeon 34122 (KR); LEE, Seung Hyeon, Daejeon 34122 (KR); JANG, Mi Jeong, Daejeon 34122 (KR)
(74) Representative: Plasseraud IP
(86) International application number: PCT/KR2025/012184
(87) International publication number: WO 2026/049364

(57) **Abstract**

BATTERY PACK INCLUDING FOAM PAD GASKET

Disclosed is a battery pack including a battery cell stack including a plurality of stacked battery cells, a battery pack body configured to receive the battery cell stack, a battery pack lid added so as to cover an open upper surface of the battery pack body, and a foam pad gasket disposed at a joint between the battery pack body and the battery pack lid, wherein a through-hole for bolt insertion is formed in an outer periphery of the battery pack lid. The battery pack may be assembled through a simple process, and airtightness of the battery pack may be maintained even after repeated disassembly and reassembly.

## Description

### [Technical Field]

This application claims the benefit of priority to Korean Patent Application No. 2024-0114197 filed on August 26, 2024 and Korean Patent Application No. 2025-0109336 filed on August 7, 2025, the disclosure of which is incorporated herein by reference in its entirety.

The present invention relates to a battery pack including a foam pad gasket. More particularly, the present invention relates to a battery pack including a foam pad gasket capable of ensuring airtightness of the battery pack without being damaged even after repeated assembly and disassembly of the battery pack.

### [Background Art]

Lithium secondary batteries, which are charged and discharged by the migration of lithium ions, have the advantages of high energy density and high charging voltage. Accordingly, lithium secondary batteries are used not only for small battery cells used in mobile devices and small electronic products but also for medium and large battery packs used as energy sources for electric vehicles and energy storage systems that require high power and high voltage.

A medium and large battery pack may include a battery module in which a plurality of battery cells is disposed in series and/or in parallel and is electrically connected to each other via a busbar, etc, and components configured to monitor the state of the battery pack may be generally added to at least one battery module in order to manufacture the battery pack.

Various attempts are being made to ensure the airtightness of the battery pack during a process of coupling a battery pack body and a battery pack lid configured to cover an open upper surface of the battery pack body in order to assemble the battery pack.

For example, a non-asbestos gasket may be disposed and coupled to the top of a side surface of the battery pack body that is coupled to the battery pack lid, the battery pack lid may be located above the non-asbestos gasket, and the battery pack lid and the battery pack body may be coupled to each other. However, this requires an additional process of coupling the non-asbestos gasket to the top of the battery pack body, and a fastening portion for fixing the non-asbestos gasket may be loosened, whereby airtightness may be lost after the battery pack body and battery pack lid are coupled to each other.

Alternatively, a method of adding a sealant to a joint between the battery pack body and the battery pack lid to couple battery pack body and the battery pack lid to each other may be used. However, this requires a process of adding the sealant, and the sealant may be damaged if the battery pack is disassembled. Consequently, airtightness may be compromised when the battery pack body and the battery pack lid are recoupled to each other.

In this regard, Patent Document 1 relates to a battery case including a base and a cover, wherein a sealing foam pad is interposed between a compression bezel corresponding to a side surface of the base and the cover to enhance the sealing force of the battery case.

Patent Document 1 only discloses that the foam pad is disposed at a joint between the compression bezel and the cover, and fails to suggest a structure in which the coupling between the compression bezel and the cover is achieved when the foam pad is interposed therebetween. Furthermore, in Patent Document 1, the foam pad may deviate from the original position thereof during the process of coupling the compression bezel and the cover, which may require precision in the assembly process.

Therefore, there is a need for a battery pack that can ensure airtightness while being assembled through a simple assembly process and can maintain airtightness even during the disassembly and reassembly processes of the battery pack.

### (Prior Art Document)

(Patent Document 1) Chinese Registered Utility Model Publication No. 219419206 (2023.07.25)

### [Disclosure]

### [Technical Problem]

The present invention has been made in view of the above problems, and it is an object of the present invention to provide a battery pack including a foam pad gasket capable of being assembled through a simple process and maintaining airtightness even during disassembly and reassembly of the battery pack.

### [Technical Solution]

A battery pack according to the present invention to accomplish the above object includes a battery cell stack including a plurality of stacked battery cells, a battery pack body configured to receive the battery cell stack, a battery pack lid added so as to cover an open upper surface of the battery pack body, and a foam pad gasket disposed at a joint between the battery pack body and the battery pack lid, wherein a through-hole for bolt insertion is formed in an outer periphery of the battery pack lid.

The foam pad gasket may be attached to a first surface of the battery pack lid.

The foam pad gasket may be attached to the first surface of the battery pack lid via an adhesive.

A groove configured to receive the foam pad gasket may be formed in the first surface of the battery pack lid, and the groove may be formed along the outer periphery of the battery pack lid and may be curved around the through-hole.

The battery pack lid may include a second surface, which is an outer surface opposite the first surface, and a part of the second surface corresponding to the groove in the first surface may be formed in a flat shape.

The battery pack lid may include a second surface, which is an outer surface opposite the first surface, and a part of the second surface corresponding to the groove in the first surface may be formed in a convex shape.

The foam pad gasket may be formed in an unbroken continuous shape.

The foam pad gasket may be deformed in a compressed shape in the state in which the battery pack lid and the battery pack body are coupled to each other via a bolt.

The vertical section of the groove may have a polygonal shape, a semicircular shape, a semielliptical shape, an elliptical shape, or a circular, elliptical, or polygonal shape with at least a part removed.

At least a part of the foam pad gasket may be received in the groove, and the part of the foam pad gasket received in the groove may be compressed while completely filling an inner space of the groove.

The horizontal section of the groove parallel to the first surface and the second surface may be formed such that the sectional area of the groove formed in the first surface is the largest and the sectional area of the groove gradually decreases in a direction toward the inside of the groove.

The horizontal section of the groove parallel to the first surface and the second surface may be formed such that the sectional area of at least one point in the groove is greater than the sectional area of the groove formed in the first surface.

In addition, the present invention may provide various combinations of the above solving means.

### [Advantageous Effects]

In a battery pack according to the present invention, a foam pad gasket may be added without requiring any additional processes during coupling between a battery pack body and a battery pack lid, whereby it is possible to assemble the battery pack through a simple process while ensuring the airtightness of the battery pack.

In addition, it is possible to minimize deviation of the foam pad gasket from the original position thereof when the battery pack body and the battery pack lid are coupled to each other.

In addition, it is possible to prevent the airtightness of the battery pack from being compromised during a process of disassembling and reassembling the battery pack.

### [Description of Drawings]

FIG. 1 is an exploded perspective view of a battery pack according to the present invention.
FIG. 2 is a perspective view showing a first surface of a battery pack lid in the battery pack of FIG. 1.
FIG. 3 is a perspective view showing a second surface of a battery pack lid according to a first embodiment.
FIG. 4 is a vertical sectional view taken along line A-A' of FIG. 3.
FIG. 5 is a perspective view showing a second surface of a battery pack lid according to a second embodiment.
FIG. 6 is a vertical sectional view taken along line B-B' of FIG. 5.
FIG. 7 is a vertical sectional view showing a part of the battery pack lid to which a foam pad gasket according to an embodiment is attached.
FIG. 8 is a vertical sectional view showing a part of the battery pack lid to which a foam pad gasket according to another embodiment is attached.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

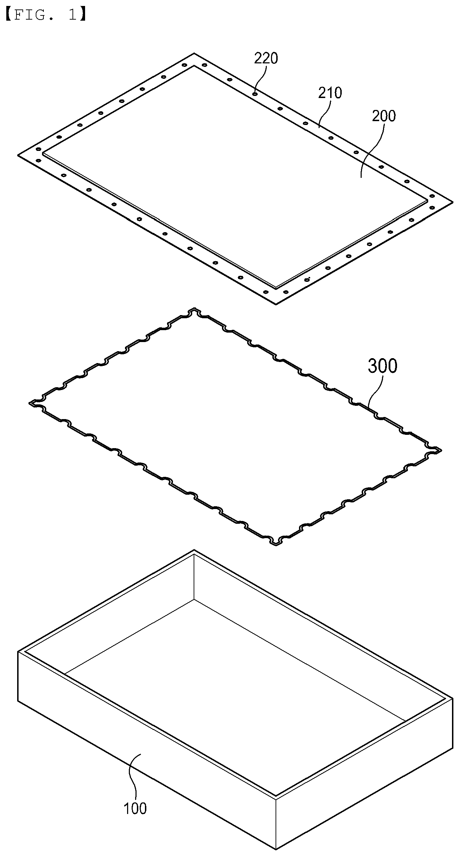

FIG. 1 is an exploded perspective view of a battery pack according to the present invention.

Referring to FIG. 1, the battery pack according to the present invention includes a battery pack body 100 having an open upper surface, the battery pack body being configured to receive a plurality of battery cells therein, a battery pack lid 200 added so as to cover the upper surface of the battery pack body 100, and a foam pad gasket 300 disposed at a joint at which the battery pack body 100 and the battery pack lid 200 are coupled to each other.

At least one battery module may be received in the battery pack body 100, wherein the battery module includes a plurality of battery cells stacked while being electrically connected to each other via a busbar, etc.

When a plurality of battery modules is received in the battery pack body 100, a side wall or a frame may be provided to partition an inner space of the battery pack body, and one or more battery modules may be received in each partitioned inner space of the battery pack body in a state of being connected to each other in series and/or in parallel.

In addition, components, such as sensors configured to monitor the temperature and voltage of the plurality of battery cells and a management unit configured to prevent malfunction, may be included to assembly the battery pack.

The battery pack lid 200 is a component that is coupled so as to cover the upper surface of the battery pack body having the battery cells received therein, and a bolt insertion through-hole 220 is formed along an outer periphery 210 of the battery pack lid 200. Consequently, the battery pack lid 200 may be stably coupled to the top of the battery pack body 100 via a bolt inserted into the through-hole 220.

Generally, in order to prevent introduction of harmful substances into the battery pack and to prevent flames or high-temperature gases generated in the battery pack from spreading out of the battery pack, a gasket is interposed between the battery pack body and the battery pack lid to ensure airtightness.

The present invention adopts a foam pad gasket that is not deformed and damaged even when the battery pack is repeatedly opened and closed.

The foam pad gasket 300 may be manufactured so as to have a specific shape, may be elastically deformed, and may block the movement of gases and liquids. The foam pad gasket 300 is not particularly limited in material as long as it is possible to perform the above functions, but may, for example, include at least one selected from the group consisting of polyurethane, polyethylene, ethylene vinyl acetate, polyvinyl chloride, silicone rubber, ethylene propylene diene monomer, and nitrile butadiene rubber.

In the state in which the battery pack lid 200 and the battery pack body 100 are coupled to each other via the bolt, the fastening force due to the bolt may be strongly applied to the foam pad gasket 300, whereby the foam pad gasket 300 may be deformed in a compressed shape.

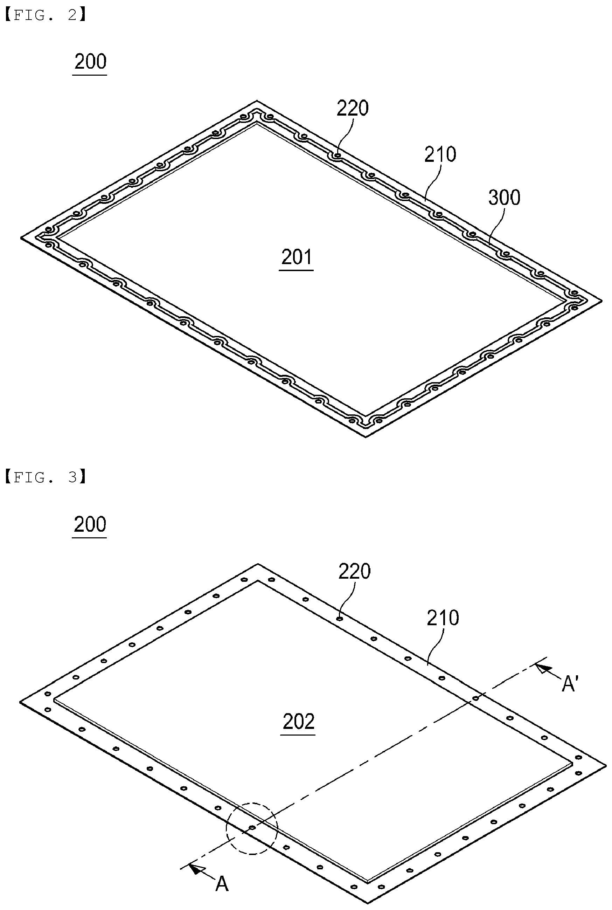

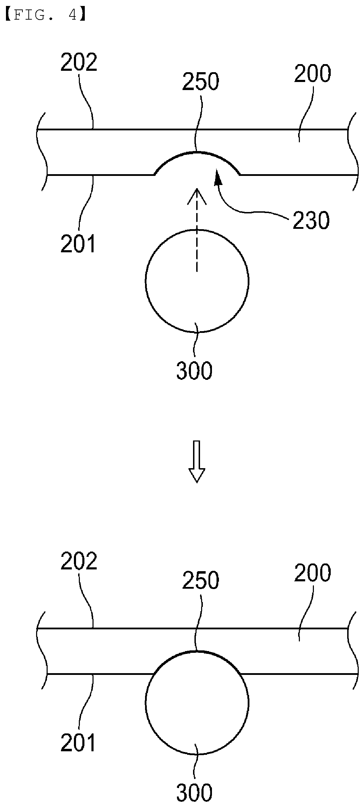

FIG. 2 is a perspective view showing a first surface of a battery pack lid in the battery pack of FIG. 1, FIG. 3 is a perspective view showing a second surface of a battery pack lid according to a first embodiment, and FIG. 4 is a vertical sectional view taken along line A-A' of FIG. 3.

Referring to FIGs. 2 to 4, the battery pack lid 200 includes a first surface 201 located in a direction in which the battery pack lid is coupled to the battery pack body, and a second surface 202, which is an outer surface opposite the first surface 201, wherein the foam pad gasket 300 is attached to the first surface 201 of the battery pack lid 200.

A groove 230 configured to receive the foam pad gasket 300 is formed in the outer periphery 210 of the first surface 201 of the battery pack lid 200, and an adhesive 250 may be applied to the inside of the groove 230. Consequently, the foam pad gasket 300 may be attached to the first surface 201 of the battery pack lid 200 via the adhesive 250, and at least a part of the foam pad gasket 300 may be inserted into the groove 230.

Alternatively, an adhesive may be added to an outer surface of the foam pad gasket 300 that is attached to the battery pack lid 200, or an adhesive tape with the adhesive coated on a substrate may be added, and the foam pad gasket 300 with the added adhesive or adhesive tape may be inserted into and attached to the groove 230 formed in the first surface 201.

The adhesive may be at least one selected from the group consisting of, for example, an epoxy-based resin, a urethane-based resin, a rubber-based resin, a vinyl chloride-based resin, and a silicone-based resin.

Furthermore, in order to ensure that the foam pad gasket 300 remains stably attached even in high-temperature environments, the adhesive may include a polymer that is highly heat resistant, such as polyphenylene oxide, polyphenylene sulfide, polyarylsulfone, or polyimide, or an inorganic material, such as ceramics, phosphorus, boron, or silica.

In a specific embodiment, since the through-hole 220 for bolt insertion is formed in the outer periphery 210 of the battery pack lid 200, the foam pad gasket 300 must be located so as not to block the through-hole 220. Consequently, the groove 230 configured to receive the foam pad gasket 300 is formed along the outer periphery 210 of the battery pack lid 200, and is formed in a curved shape around the through-hole 220.

Meanwhile, the foam pad gasket 300 is interposed between surfaces of the battery pack body 100 and the battery pack lid 200 that are coupled to each other and serves as a means configured to ensure airtightness of the battery pack. The foam pad gasket is formed along the outer peripheries of the battery pack body 100 and the battery pack lid 200 in an unbroken continuous shape, thereby completely blocking the inflow and outflow of gases and liquids.

Referring to FIG. 3, the battery pack lid 200 includes a second surface 202, which is an outer surface opposite the first surface 201, wherein an outer periphery 210 on the second surface 202 corresponding to the groove 230 in the first surface 201 is formed in a flat shape.

In this case, the foam pad gasket 300 may be stably located in the groove 230 in a state of being adhered by the adhesive 250, and the outer periphery 210 of the second surface 202 of the battery pack lid 200 may be a flat surface without a step.

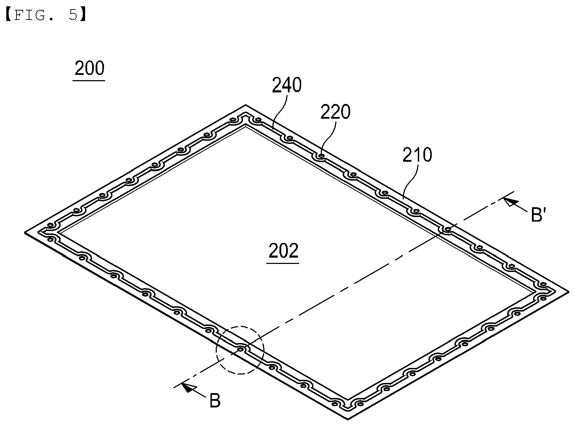

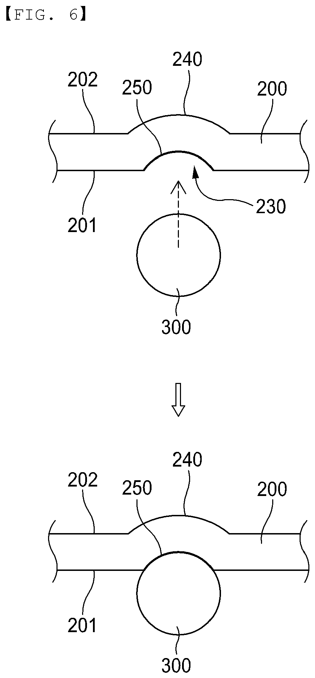

FIG. 5 is a perspective view showing a second surface of a battery pack lid according to a second embodiment, and FIG. 6 is a vertical sectional view taken along line B-B' of FIG. 5.

Referring to FIGs. 5 and 6, the battery pack lid according to the second embodiment is different from the battery pack lid according to the first embodiment in that a protrusion 240 is formed on an outer periphery 210 of the battery pack lid 200.

Specifically, a groove 230 configured to receive a foam pad gasket 300 may be formed in an outer periphery 210 of a first surface 201 of the battery pack lid 200, and an adhesive 250 may be added to the groove 230, wherein a part of the foam pad gasket 300 may be adhered to the inside of the groove 230 via the adhesive 250 in a state of being received in the groove 230.

In the battery pack lid 200 according to the second embodiment, the groove 230 is formed in the first surface 201, and the protrusion 240 is formed on the second surface 202 while convexly protruding so as to correspond to the groove 230. Consequently, the thickness of the battery pack lid 200 at the part at which the groove 230 is formed may not be reduced. In addition, compared to the battery pack lid according to the first embodiment, the depth of the groove 230 may be further increased, allowing the foam pad gasket 300 to be more stably received in and fixed to the groove.

A description of the battery pack according to the first embodiment may be equally applied to the battery pack lid according to the second embodiment.

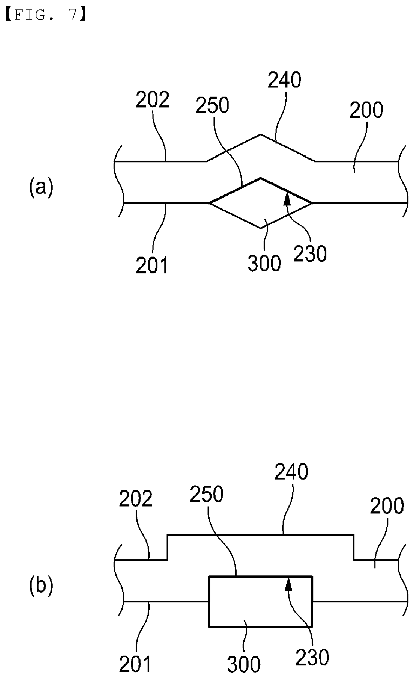

FIG. 7 is a vertical sectional view showing a part of the battery pack lid to which a foam pad gasket according to an embodiment is attached.

Referring to FIG. 7, the foam pad gasket 300 shown in (a) and (b) is attached to the groove of the battery pack lid 200 via the adhesive 250. The foam pad gasket 300 shown in (a) has a vertical section in the shape of a rhombus, and the foam pad gasket shown in (b) has a vertical section in the shape of a rectangle.

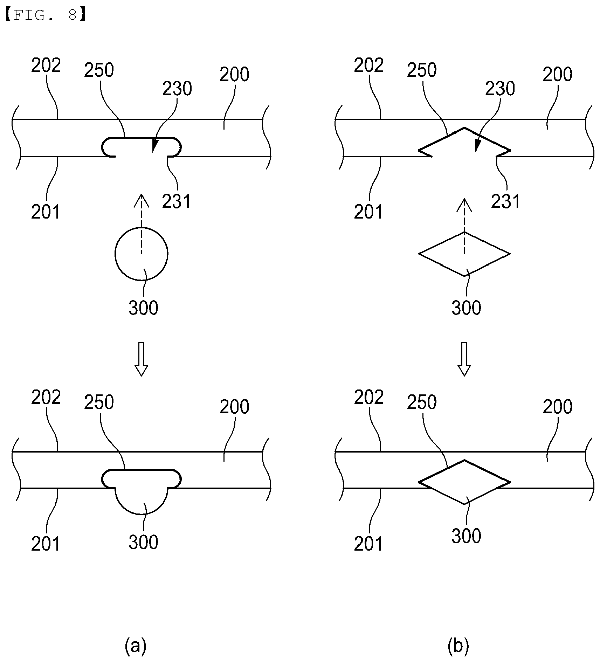

In (a), the vertical section of the groove 230 formed in the battery pack lid 200 is triangular in shape, and in (b), the vertical section of the groove 230 formed in the battery pack lid 200 is quadrangular in shape. In addition, the vertical section of the groove 230 shown in FIGs. 4 and 6 is semicircular or semielliptical in shape. Furthermore, the vertical section of the groove 230 may have an elliptical shape, a circular or elliptical shape with at least a part removed, or a polygonal shape with at least a part removed, as shown in FIG. 8.

At least a part of the foam pad gasket 300 that is adhered to the battery pack lid 200 is received in the groove 230, and in order to increase the force of coupling between the foam pad gasket 300 and the groove 230, a part of the foam pad gasket 300 that is received in the groove 230 may be formed in a shape corresponding to the shape of the groove 230. Alternatively, the foam pad gasket 300 may have a size greater than the size of the groove 230, and the foam pad gasket 300 may be compressively deformed while completely filling the inner space of the groove 230 after being inserted into the groove 230.

In addition, although the second surface 202 of the battery pack lid 200 shown in FIG. 7 is convex, the groove 230 and the foam pad gasket 300 shown in FIG. 7 may also be applied to the battery pack lid 200 having the flat second surface 202 as shown in FIG. 4.

In the battery pack lid 200 shown in FIGs. 4, 6, and 7, when the first surface 201 and the second surface 202 are parallel to each other, the section of the groove 230 parallel to the first surface 201 and the second surface 202 may be considered a horizontal section of the groove. The sectional area of the groove, which is the area of the horizontal section of the groove, may be uniform regardless of the position of the battery pack lid 200 in a thickness direction, as shown in (b) of FIG. 7, or may vary depending on the position of the battery pack lid 200 in the thickness direction, as shown in FIG. 4, FIG. 6, and (a) of FIG. 7. In the groove 230 shown in FIGs. 4, 6, and 7, the sectional area of the groove 230 formed in the first surface 201 is the largest, and the sectional area of the groove may gradually decrease in a direction toward the inside of the groove, or the sectional area of the groove may be uniform.

FIG. 8 is a vertical sectional view showing a part of the battery pack lid to which a foam pad gasket according to another embodiment is attached.

Referring to FIG. 8, when the first surface 201 and the second surface 202 of the battery pack lid 200 are parallel to each other, the horizontal section of the groove 230 parallel to the first surface 201 and the second surface 202 is formed such that the sectional area of at least one point in the groove 230 is greater than the sectional area of the groove 230 formed in the first surface 201.

That is, since the groove 230 of the battery pack lid 200 shown in FIG. 8 is formed such that the sectional area of the groove 230 at a groove entrance 231 through which the foam pad gasket 300 is inserted is less than the maximum sectional area in the groove 230, the foam pad gasket 300 inserted into the groove 230 may be anchored and securely fixed at the groove entrance 231 in an elastically deformed state.

Although FIG. 8 shows that the adhesive 250 is applied to the inside of the groove 230, the adhesive 250 may not be applied to the inside of the groove 230. In addition, although FIG. 8 shows that the second surface is flat, the shape of the groove 230 shown in FIG. 8 may also be adopted even when the protrusion is convexly formed on the second surface 202, as shown in FIGs. 6 and 7.

In the present invention, as described above, the foam pad gasket 300 is stably adhered to the groove 230 of the battery pack lid 200, and therefore the foam pad gasket 300 may be stably fixed to the groove 230 without escaping from the groove when the battery pack body 100 and the battery pack lid 200 are coupled to each other via the bolt. Consequently, it is possible to easily and quickly assemble the battery pack.

Those skilled in the art to which the present invention pertains will appreciate that various applications and modifications are possible within the category of the present invention based on the above description.

### (Description of Reference Numerals)

100: Battery pack body
200: Battery pack lid
201: First surface
202: Second surface
210: Outer periphery
220: Through-hole
230: Groove
231: Groove entrance
240: Protrusion
250: Adhesive
300: Foam pad gasket

## Claims

1. A battery pack comprising:
a battery cell stack comprising a plurality of stacked battery cells;
a battery pack body configured to receive the battery cell stack;
a battery pack lid added so as to cover an open upper surface of the battery pack body; and
a foam pad gasket disposed at a joint between the battery pack body and the battery pack lid, wherein
a through-hole for bolt insertion is formed in an outer periphery of the battery pack lid.

2. The battery pack according to claim 1, wherein the foam pad gasket is attached to a first surface of the battery pack lid.

3. The battery pack according to claim 2, wherein the foam pad gasket is attached to the first surface of the battery pack lid via an adhesive.

4. The battery pack according to claim 2, wherein
a groove configured to receive the foam pad gasket is formed in the first surface of the battery pack lid, and
the groove is formed along the outer periphery of the battery pack lid and is curved around the through-hole.

5. The battery pack according to claim 4, wherein
the battery pack lid comprises a second surface, which is an outer surface opposite the first surface, and
a part of the second surface corresponding to the groove in the first surface is formed in a flat shape.

6. The battery pack according to claim 4, wherein
the battery pack lid comprises a second surface, which is an outer surface opposite the first surface, and
a part of the second surface corresponding to the groove in the first surface is formed in a convex shape.

7. The battery pack according to claim 1, wherein the foam pad gasket is formed in an unbroken continuous shape.

8. The battery pack according to claim 1, wherein the foam pad gasket is deformed in a compressed shape in a state in which the battery pack lid and the battery pack body are coupled to each other via a bolt.

9. The battery pack according to claim 5, wherein a vertical section of the groove has a polygonal shape, a semicircular shape, a semielliptical shape, an elliptical shape, or a circular, elliptical, or polygonal shape with at least a part removed.

10. The battery pack according to claim 9, wherein
at least a part of the foam pad gasket is received in the groove, and
the part of the foam pad gasket received in the groove is compressed while completely filling an inner space of the groove.

11. The battery pack according to claim 10, wherein a horizontal section of the groove parallel to the first surface and the second surface is formed such that a sectional area of the groove formed in the first surface is the largest and the sectional area of the groove gradually decreases in a direction toward an inside of the groove.

12. The battery pack according to claim 10, wherein a horizontal section of the groove parallel to the first surface and the second surface is formed such that a sectional area of at least one point in the groove is greater than a sectional area of the groove formed in the first surface.
